# EUROPÄISCHE PATENTANMELDUNG

(11) **EP 4 477 955 A1**
(43) Veröffentlichungstag der Anmeldung: **18.12.2024**
(21) Anmeldenummer: 24177817.4
(22) Anmeldetag: 24.05.2024
(51) Int. Cl.: F24C 7/08, A21B 7/00, A21B 3/04, F24C 15/32

(54) **BACKSYSTEM SOWIE VERFAHREN ZUM BETRIEB EINES DERARTIGEN BACKSYSTEMS**

(30) Priorität: 12.06.2023 DE 102023205412
(71) Anmelder: Werner & Pfleiderer Lebensmitteltechnik GmbH, 91550 Dinkelsbühl (DE)
(72) Erfinder: Fuchs, Andreas, 91626 Schopfloch (DE); Schabert, Michael, 86343 Königsbrunn (DE)
(74) Vertreter: Rau, Schneck & Hübner Patentanwälte Rechtsanwälte PartGmbB

(57) **Zusammenfassung**

Ein Backsystem (1) hat mindestens einen Backofen (2 bis 5), angeordnet in einem Bäckerei-Raum (9). Eine Innenraum-Sensoreinrichtung (10) hat Innenraum-Sensoren (11 bis 13) zur Erfassung mindestens eines Raumzustands-Parameters außerhalb des Backofens (2 bis 5) und innerhalb des Bäckerei-Raums (9). Eine Umgebungs-Sensoreinrichtung (19) hat Umgebungs-Sensoren (20 bis 22) zur Erfassung mindestens eines Umgebungs-Wetter-Parameters in einer Umgebung des Bäckerei-Raums (9). Eine Steuer/Regeleinrichtung (15) steht mit der Innenraum-Sensoreinrichtung (10) und der Umgebungs-Sensoreinrichtung (19) sowie mit dem mindestens einen Backofen (2 bis 5) in Signalverbindung (14, 23, 16). Es resultiert ein Backsystem, das reproduzierbar Backergebnisse gleichbleibender Qualität liefert.

## Beschreibung

Der Inhalt der deutschen Patentanmeldung DE 10 2023 205 412.4 wird durch Bezugnahme hierin aufgenommen.

Die Erfindung betrifft ein Backsystem mit mindestens einem Backofen, der in einem Bäckerei-Raum angeordnet ist. Ferner betrifft die Erfindung ein Verfahren zum Betrieb eines derartigen Backsystems.

Ein Backsystem der eingangs genannten Art ist durch offenkundige Vorbenutzung bekannt. Die DE 10 2020 215 821 A1 offenbart ein Verfahren zum Kalibrieren eines Backofens, ein Verfahren zum Backen eines Backprodukts mit einem entsprechend kalibrierten Backofen sowie einen Backofen zur Durchführung eines derartigen Verfahrens.

Es ist eine Aufgabe der vorliegenden Erfindung, ein Backsystem der eingangs genannten Art derart weiterzubilden, dass es reproduzierbar Backergebnisse gleichbleibender Qualität liefert.

Diese Aufgabe ist erfindungsgemäß gelöst durch ein Backsystem mit den im Anspruch 1 angegebenen Merkmalen.

Erfindungsgemäß wurde erkannt, dass ein Backergebnis eines in einem Bäckerei-Raums bzw. eines Backlokals angeordneten Backofens nicht nur von einer Einhaltung von Sollwerten eines Backprogramms abhängt, sondern auch von vorliegenden, messbaren Parametern außerhalb des jeweiligen Backofens und innerhalb des Bäckerei-Raums einerseits, also vom jeweiligen Raumklima, sowie abhängig von Umgebungs-Wetter-Parametern einer Außen-Umgebung des Bäckerei-Raums andererseits, also vom jeweiligen Wetter. Das erfindungsgemäße Backsystem stellt Sensoreinrichtungen zur Erfassung entsprechender Parameter zur Verfügung, die der Steuer/Regeleinrichtung zur Beeinflussung eines Backprogramms über die Signalverbindung zur Verfügung gestellt werden können. Diese Sensoreinrichtungen sind einerseits die Innenraum-Sensoreinrichtung zur Erfassung mindestens eines Raumzustands-Parameters außerhalb des Backofens und innerhalb des Bäckerei-Raums und andererseits die Umgebungs-Sensoreinrichtung zur Erfassung mindestens eines Umgebungs-Wetter-Parameters in einer Umgebung des Bäckerei-Raums, also außerhalb des Bäckerei-Raums. Insbesondere eine automatische raumklima- und wetterabhängige Beeinflussung von Rezept-Backschrittwerten anhand gemessener Sensordaten der Innenraum-Sensoreinrichtung und der Umgebungs-Sensoreinrichtung ist möglich. Ein erfahrungsgetriebener Eingriff einer Bedienperson des Backsystems ist dann nicht erforderlich. Ein reproduzierbarer und insbesondere raumklima- und wetterunabhängiger Backbetrieb kann dann gewährleistet werden. Die Signalverbindung zwischen der Steuer/Regeleinrichtung und den Sensoreinrichtungen kann kabelgebunden und/oder kabellos erfolgen.

Die Signalverbindung zwischen der Steuer/Regeleinrichtung und dem mindestens einen Backofen kann über einen Datenbus erfolgen.

Das Backsystem kann eine sensorische Trennung zwischen der Innenraum-Sensoreinrichtung (Erfassung von Messdaten innerhalb des Bäckerei-Raums) und der Umgebungs-Sensoreinrichtung (Erfassung von Messdaten außerhalb des Bäckerei-Raums) zur Verfügung stellen.

Sensoren nach den Ansprüche 2 und 3 haben sich zur Parametererfassung als besonders geeignet herausgestellt.

Backofenkomponenten nach den Ansprüchen 4 und 5 sind zur Erzielung eines guten Backergebnisses vorteilhaft. Die Entschwadungseinheit der Beschwadungs-Einrichtung kann als mindestens eine Entschwadungsklappe ausgebildet sein. Eine derartige Entschwadungsklappe kann genau zwei Klappenstellungen (offen/zu) oder auch mindestens eine Zwischenstellung, insbesondere eine Mehrzahl von Zwischenstellungen, aufweisen. Auch mehrere hintereinander angeordnete Entschwadungsklappen können in einem Entschwadungskanal des Backofens vorgesehen sein.

Mehrere Backöfen nach Anspruch 6 ergeben ein flexibel einsetzbares Backsystem. Es können insbesondere mehrere Backofen-Typen im Backsystem vorhanden sein. Auch eine Backanlage mit einer Gäreinrichtung und/oder einer Teigteil- und Wirkeinrichtung kann Bestandteil des Backsystems sein.

Die Vorteile eines Betriebsverfahrens nach Anspruch 7 entsprechen zunächst denen, die vorstehend unter Bezugnahme auf das Backsystem bereits erläutert wurden.

Mit dem Verfahren ist eine automatische raumklima- und wetterabhängige Beeinflussung von Rezept-Backschrittwerten des jeweiligen Backprogramms anhand gemessener Außen- und Innenraum-Messwerte möglich. Eine gleichbleibende Produktqualität kann auch bei raumklima- und wetterabhängigen veränderten Gegebenheiten wie Temperatur, Feuchtigkeit und Luftdruck bim Produzieren von Backwaren bereitgestellt werden. Beispielsweise kann ein Austrocknen der Backware bei heißen Umwelteinflüssen vermieden werden, wie beispielsweise einem heißen Sommertag. Auch ein Nachlassen einer Krustenrösche bei feuchtem Raumklima und/oder bei feuchter Witterung kann vermieden werden. Auch eine zu starke Rösche kann bei entsprechend trockener Witterung vermieden werden. Ein manueller Eingriff der Bedienperson zur Beeinflussung von Rezeptbackschritt-Parametern aufgrund insbesondere witterungsbedingter Einflüsse kann ebenfalls vermieden werden.

Mit dem Betriebsverfahren kann zudem eine Energieeinsparung erreicht werden, da Backparameter wie insbesondere eine Backtemperatur und auch eine Schwadenmenge beeinflusst werden können, die je nach Raumklima und/oder Witterung jeweils ohne Qualitätseinbuße sogar mit optimierter Qualität verringert werden können.

Bei der Ermittlung der Steuerdaten kann eine Differenzbildung zwischen den Soll/Ist-Werten der Raumzustands-Parameter und/oder eine Differenzbildung zwischen den Soll/Ist-Werten der Umgebungs-Wetter-Parameter erfolgen. Bei der Ermittlung der Steuerdaten kann eine Mittelwertbildung der erfassten Sensordaten erfolgen. Die Beeinflussung des parametersensitiven Backschritts kann durch Vorgabe geänderter Backparameter-Sollwerte erfolgen. Mehrere oder alle Backschritte können parametersensitive Backschritte im Sinne des Betriebsverfahrens sein. Eine Ermittlung der Steuerdaten kann durch die Steuer/Regeleinrichtung aufgrund einer Berechnung oder auch durch Nachschlagen in einer vorher abgelegten Look-up-Tabelle erfolgen.

Steuerdaten nach Anspruch 8 haben sich zur Parameterbeeinflussung des jeweiligen parametersensitiven Backschritts als besonders geeignet herausgestellt.

Soweit Teil des Backsystems auch eine Backanlage mit automatisierter Teigbearbeitung im Vorfeld eines Backprogramms ist, können auch weitere relevante Parameter durch Steuerdaten im Rahmen des Betriebsverfahrens als veränderte Sollwerte vorgegeben werden, beispielsweise eine Temperatur eines Gärschritts, eine Dauer eines Gärschritts, eine Teigrezeptur oder auch die Dauer eines Mischschritts oder die Dauer eines Wirkschritts.

Eine Taupunkts-Berechnung nach Anspruch 9 hat sich zur Bestimmung einer Kritizität einer Parameterbeeinflussung als besonders geeignet herausgestellt.

Bei einem Verfahren nach Anspruch 10 können Master-Parameterdaten als Ausgangspunkt der Vorgabe dienen, die dann entsprechend den gemessenen Sensordaten verändert werden.

Bei einem Verfahren nach Anspruch 11 führen Ergebnisse früherer Betriebsabläufe zur Möglichkeit einer zusätzlichen Anpassung der Steuerdaten. Hierzu kann manuell oder gegebenenfalls auch automatisch, beispielsweise über entsprechende Sensoren, mindestens ein Qualitätsparameter eines Backresultats an die Steuer/Regeleinrichtung als Rückmeldung ausgegeben werden, beispielsweise ein Bräunungsgrad des Backergebnisses oder eine innerhalb eines gebackenen Referenz-Backguts gemessenen Restfeuchte. Das Verfahren kann als Teach-in-Verfahren ausgestaltet sein.

Eine zyklische Erfassung der Sensordaten nach Anspruch 12 ist einfach realisierbar.

Eine betriebsabhängige Erfassung der Sensordaten nach Anspruch 13 ist gut an den Ablauf des Betriebsverfahrens angepasst. Die Sensordaten können z. B. zu Beginn eines Backprogramms und/oder zu Beginn eines jeweiligen parametersensitiven Backschritts erfasst werden.

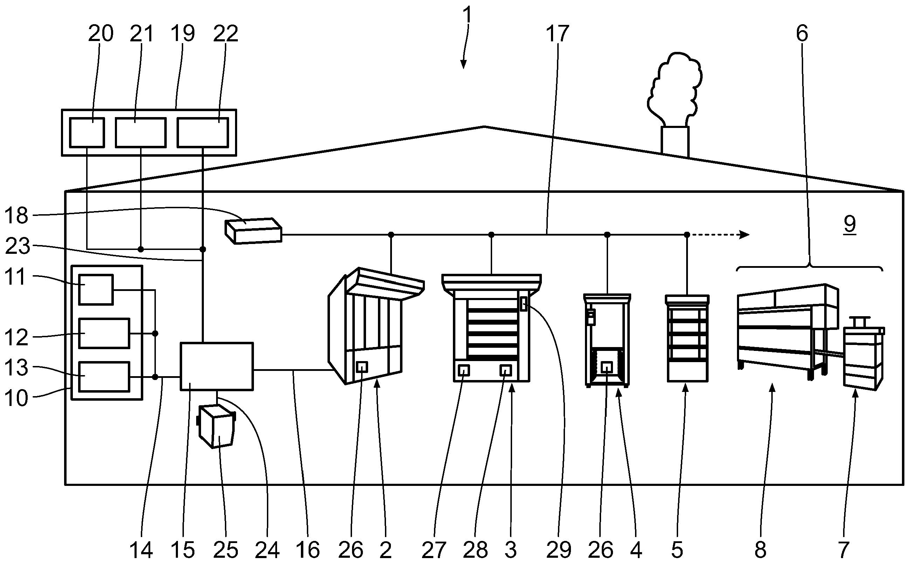

Ausführungsbeispiele der Erfindung werden nachfolgend anhand der Zeichnung näher erläutert.

Die einzige Figur zeigt schematisch ein Backsystem mit mehreren Backofen-Typen in einem Bäckerei-Raum einschließlich einer sensorischen Messwert-Erfassung sowohl in einem Innenraum des Bäckerei-Raums als auch in einer Umgebung des Bäckerei-Raums. Ein derartiger Bäckerei-Raum wird auch als Backlokal bezeichnet.

Ein Backsystem 1 hat mindestens einen Backofen zum Backen von Teiggut, insbesondere von Brötchen, Brot und anderen Backwaren. Beispiele hierfür sind Plundergebäck, insbesondere süße Plunder, Laugen-Gebäck und Kleingebäck.

Beim in der Figur dargestellten Backsystem 1 hat dieses Backöfen mehrerer Typen, nämlich einen Stikkenofen 2, einen Etagenbackofen 3, einen Steinplatten-Backofen 4, einen Laden-Etagenbackofen 5, sowie eine Brötchenanlage 6. Zu Letzterer gehört eine Teigteil- und Wirkvorrichtung 7 und eine Gäreinrichtung 8.

Die Backofen-Typen 2 bis 5 und die Brötchenanlage 6 sind in einem Bäckerei-Raum 9 des Backsystems 1 angeordnet. Hierbei handelt es sich regelmäßig um eine Backstube.

Im Bäckerei-Raum 9 und außerhalb von Backräumen der Backofen-Typen 2 bis 5 sowie der Brötchenanlage 6 ist eine Innenraum-Sensoreinrichtung 10 des Backsystems 1 angeordnet. Die Innenraum-Sensoreinrichtung 10 hat mehrere Innenraum-Sensoren zur Erfassung mindestens eines Raumzustand-Parameters außerhalb der Backöfen 2 bis 5 sowie der Brötchenanlage 6 und innerhalb des Bäckerei-Raums 9. Als Innenraum-Sensoren hat die Innenraum-Sensoreinrichtung 10 einen Innenraum-Temperatursensor 11, ausgeführt als Thermometer, einen Innenraum-Drucksensor 12, ausgeführt als Barometer, und einen Innenraum-Luftfeuchtigkeitssensor 13, ausgeführt als Hygrometer.

Über eine Signalleitung 14 stehen die Innenraum-Sensoren 11 bis 13 mit einer Steuer/Regeleinrichtung 15 des Backsystems 1 in Signalverbindung. Die Steuer/Regeleinrichtung 15 steht wiederum über eine Signalleitung 16 mit dem Backofen 2 und über eine Signalleitung in Form einer Ethernet-Verbindung 17 mit den Backöfen 2 bis 5 und der Brötchenanlage 6 in Signalverbindung. Bei der Signalleitung 16 kann es sich um eine Datenbus-Verbindung handeln, insbesondere um einen CAN-Bus. Die Backöfen 2 bis 5 sowie die Brötchenanlage 6 stehen untereinander über die Signalleitung 17 in Signalverbindung. Hierbei kann es sich um eine Ethernet-Datenverbindung handeln. Über einen Hub 18, also einen Datenverteiler, lässt sich diese Datenverbindung über die Signalleitung 17 noch auf weitere noch zu installierende Backöfen bzw. Brötchenanlagen erweitern.

Das Backsystem 1 hat weiterhin eine Umgebungs-Sensoreinrichtung 19 mit mindestens einem Umgebungs-Sensor zur Erfassung mindestens eines Umgebungs-Wetter-Parameters in einer Umgebung des Bäckerei-Raums 9. Die Umgebungs-Sensoreinrichtung 19 ist im Außenbereich eines Gebäudes angeordnet, in dem wiederum der Bäckerei-Raum 9 untergebracht ist. Als Umgebungs-Sensoren hat die Umgebungs-Sensoreinrichtung 19 einen Umgebungs-Temperatursensor 20, ausgeführt als Thermometer, einen Umgebungs-Drucksensor 21, ausgeführt als Barometer, und einen Umgebungs-Luftfeuchtigkeitssensor 22, ausgeführt als Hygrometer.

Über eine Signalleitung 23 stehen die Umgebungs-Sensoren 20 bis 22 der Umgebungs-Sensoreinrichtung 19 mit der Steuer/Regeleinrichtung 15 in Signalverbindung.

Die Signalleitungen 14, 16, 17 und 23 können als drahtgebundene Leitungen und/oder als drahtlose Signalverbindungen, beispielsweise als WLAN- oder Mobilfunk-Signalverbindungen ausgestaltet sein. Der jeweiligen Signalleitung 14, 16, 17 und 23 kann eine entsprechende Schnittstelle zugeordnet sein.

Über eine Versorgungsleitung 24 steht die Steuer/Regeleinrichtung 15 mit einer Stromquelle 25 in Verbindung.

Je nach Typ haben die Backöfen 2 und 4 sowie ein gegebenenfalls vorhandener, weiterer Backofen der Brötchenanlage 6 eine Umluft-Heizeinrichtung mit mindestens einem Umluft-Ventilator sowie eine Beschwadungs-Einrichtung mit einer steuerbaren Entschwadungseinheit. Eine solche Umluft-Heizeinrichtung 26 mit einem Umluft-Ventilator 27 ist in der Figur bei den als Stikkenbacköfen ausgeführten Backöfen 2 und 4 und eine Beschwadungs-Einrichtung 28 mit einer steuerbaren Entschwadungseinheit 29 in Form einer Entschwadungsklappe mit einem Schwadenzugmotor sind in der Figur beim Etagenbackofen 3 schematisch angedeutet.

Beim Betrieb des Backsystems 1 wird zunächst ein Backprogramm in Form eines Master-Rezeptes mit Backschritten bereitgestellt. Ein derartiges Master-Rezept kann beispielsweise folgendermaßen aussehen:

**Tabelle 1: Master-Rezept**

| **Backschritt-Nummer** | **Dauer** | **Temperatur** | **Schwadenmenge** | **Schwadenzug-Stellung** | **Umwälzer-frequenz** |
|---|---|---|---|---|---|
| 1 | 1:30 | 240°C | 4,01 | 0% | 0 Hz |
| 2 | 2:45 | 235°C | 01 | 0% | 50 Hz |
| 3 | 10:30 | 200°C | 01 | 0% | 50 Hz |
| 4 | 1:15 | 230°C | 01 | 100 % | 50 Hz |

Das Master-Rezept gilt bei vorgegebenen Soll-Umgebungs-Wetter-Parametern, nämlich beispielsweise einer Außentemperatur von 20°C, einem Luftdruck von 1013 mbar und einer Luftfeuchtigkeit von 50 %.

Die Backschrittdauer ist angegeben in Minuten: Sekunden. Die oben angegebenen Temperaturwerte entsprechen der Temperatur im Backraum des Backofens 2 bis 5 oder gegebenenfalls 6, in dem gemäß dem Master-Rezept gebacken/produziert wird.

Die Schwadenmenge bezeichnet eine Wassermenge zur Schwadenerzeugung beim Betrieb der Beschwadungs-Einrichtung 28 zur Zuführung von Backschwaden zum entsprechenden Backraum.

Die Schwadenzug-Stellung bezeichnet eine Klappenstellung der Entschwadungsklappe der Entschwadungseinheit 29. Der Prozentwert der Schwadenzugstellung entspricht einer Entschwadungsrate der Entschwadungseinheit 29. Eine Schwadenzug-Stellung kann auch in Zwischenwerten, beispielsweise in 10%-Schritten zwischen 0 % und 100 %, angegeben sein. Entsprechend hat dann die Entschwadungsklappe der Entschwadungseinheit 29 zehn verschiedene Klappenstellungen. Auch eine Kombination mehrerer beispielsweise sequentiell angeordneter Entschwadungsklappen innerhalb der Entschwadungseinheit 29 ist möglich.

Die Umwälzerfrequenz bezeichnet eine Drehzahl des Umluft-Ventilators 27 der Umluft-Heizeinrichtung.

Die Backschritte 1 bis 4 dieses Master-Rezeptes sind parametersensitive Backschritte, die abhängig sind von einer Differenz zwischen einem gemessenen Ist-Raumzustands-Parameter, gemessen über die Innenraum-Sensoreinrichtung 10, und einem vorgegebenen Soll-Raumzustands-Parameter und/oder von einer Differenz zwischen einem Ist-Umgebungs-Wetter-Parameter, gemessen mittels der Umgebungs-Sensoreinrichtung 19, und einem vorgegebenen Soll-Umgebungswetter-Parameter.

Beim Betriebsverfahren erfolgt nach dem Bereitstellen des Master-Rezeptes ein Erfassen der Innenraum-Sensordaten über die Innenraum-Sensoreinrichtung 10 und ein Erfassen der Umgebungs-Sensordaten über die Umgebungs-Sensoreinrichtung 19, also ein Erfassen einerseits der Raumzustands-Parameter des Bäckerei-Raums und andererseits der Umgebungs-Wetter-Parameter in der äußeren Umgebung des Bäckerei-Raums 9.

Es erfolgt nun über die Steuer/Regeleinrichtung 15 ein Beeinflussen der parametersensitiven Backschritte 1 bis 4 auf Grundlage von Steuerdaten, die von der Steuer/Regeleinrichtung 15 anhand der erfassten Sensordaten der Sensoren 11 bis 13 der Innenraum-Sensoreinrichtung 10 einerseits und der Sensoren 20 bis 22 der Umgebungs-Sensoreinrichtung 19 andererseits ermittelt und vorgegeben werden. Grundsätzlich kann eine Beeinflussung der Sollwerte in allen Backschritten eines angewählten Rezepts am Backofen/an der Brötchenanlage erfolgen.

Tabelle 2 zeigt ein entsprechendes Ergebnis eines angepassten Rezeptes "Regen-Wetter", ausgehend vom obigen Master-Rezept nach Tabelle 1:
Bei dem über die Umgebungs-Sensoreinrichtung 9 erfassten Regenwetters ist der über das Barometer 21 erfasste Luftdruck niedrig und die Luftfeuchtigkeit, die über das Hygrometer 22 erfasst wird, hoch.

**Tabelle 2: angepasstes Rezept "Regen-Wetter"**

| **Backschritt-Nummer** | **Dauer** | **Temperatur** | **Schwadenmenge** | **Schwadenzug-Stellung** | **Umwälzer-frequenz** |
|---|---|---|---|---|---|
| 1 | 1:30 | 240°C | 3,81 | 0% | 0 Hz |
| 2 | 2:45 | 245°C | 01 | 0% | 50 Hz |
| 3 | 10:30 | 198°C | 01 | 0% | 55 Hz |
| 4 | 1:15 | 230°C | 01 | 100 % | 55 Hz |

Im Backschritt 1 wird beim Regenwetter-Rezept nach Tabelle 2 also eine im Vergleich zum Master-Rezept geringere Schwadenmenge vorgegeben. In dem Backschritt 2 erfolgt ein Backen bei einer im Vergleich zum Master-Rezept erhöhten Temperatur. Im Backschritt 3 erfolgt ein Backen bei einer gegenüber dem Master-Rezept leicht niedrigeren Temperatur und einer höheren Umwälzer-Frequenz des Umluft-Ventilators 27. Im Backschritt 4 erfolgt beim Rezept "Regenwetter" im Vergleich zum Master-Rezept ein Backen bei wiederum auf 55 Hz erhöhter Umwälzer-Frequenz.

Bei einem weitergehend modifizierten Rezept "Regenwetter" kann, ausgehend vom obigen, entsprechend Tabelle 2 angepassten Rezept auch die Zeitdauer eines der Backschritte 1 bis 4 verändert werden. Beispielsweise kann bei einer Variante des angepassten Rezepts "Regenwetter" der Backschritt 4, insbesondere zur Anpassung an eine gestiegene Luftfeuchtigkeit, verlängert werden.

Tabelle 3 zeigt eine ebenfalls mittels des Betriebsverfahrens veränderte Rezeptur "Sonnenschein-Wetter", bei der im Vergleich zu den Soll-Umgebungs-Wetter-Parametern des Master-Rezeptes der Umgebungs-Temperatursensor eine erhöhte Temperatur von beispielsweise 30°C anzeigt, der Umgebungs-Drucksensor 21 einen erhöhten Luftdruck von beispielsweise 1020 mbar und der Umgebungs-Luftfeuchtesensor 22 eine reduzierte Luftfeuchtigkeit von beispielsweise 30 %.

**Tabelle 3: angepasstes Rezept "Sonnenschein-Wetter"**

| **Backschritt-Nummer** | **Dauer** | **Temperatur** | **Schwadenmenge** | **Schwadenzug-Stellung** | **Umwälzer-frequenz** |
|---|---|---|---|---|---|
| 1 | 1:30 | 240°C | 4,21 | 0 % | 0 Hz |
| 2 | 2:45 | 240°C | 01 | 0 % | 50 Hz |
| 3 | 10:30 | 202°C | 01 | 0 % | 48 Hz |
| 4 | 1:15 | 232°C | 01 | 100 % | 48 Hz |

Beim Rezept "Sonnenschein-Wetter" nach Tabelle 3 ist im Backschritt 1 die Schwadenmenge erhöht auf 4,2 1 gegenüber dem Master-Rezept. Im Backschritt 2 ist die Backtemperatur erhöht auf 240°C. Im Backschritt 3 ist die Backtemperatur erhöht auf 202°C und die Umwälzerfrequenz erniedrigt auf 48 Hz. Im Backschritt 4 ist die Backtemperatur erhöht auf 232°C und die Umwälzerfrequenz erniedrigt auf 48 Hz.

Eine zusätzliche Beeinflussung der abgeänderten Rezepte "Regenwetter" und "Sonnenschein-Wetter" kann sich aufgrund von Unterschieden zwischen über die Sensoren der Innenraum-Sensoreinrichtung 10 gemessenen Ist-Raumzustands-Parameter von Soll-Raumzustands-Parametern, also abhängig vom gemessenen Raumklima des Bäckerei-Raums 9, ergeben.

Beispielsweise ist es möglich, dass bei ähnlichen Umgebungs-Wetter-Parametern beispielsweise aufgrund eines Hochbetriebes im Bäckerei-Raum 9 eine erhöhte Innenraum-Temperatur, also eine im Vergleich zu einer vorgegebenen Soll-Innenraum-Temperatur, z. B. 20°C, erhöhte Ist-Innenraum-Temperatur vorliegt, was über den Innenraum-Temperatursensor 11 gemessen werden kann.

Entsprechend können auch gegebenenfalls wetterunabhängige Abweichungen beim Innenraum-Luftdruck, gemessen über den Innenraum-Drucksensor 12, und bei der Innenraum-Luftfeuchtigkeit, gemessen über den Innenraum-Luftfeuchtigkeitssensor 13, vorliegen, was bei den Betriebsparametern "Backtemperatur", "Schwadenmenge", "Schwadenzug-Stellung" und "Umwälzer-Frequenz" des jeweiligen Backprogramms berücksichtigt werden kann. Diese Betriebsparameter werden über Steuerdaten der Steuer/Regeleinrichtung 15 bei den jeweiligen Backöfen 2 bis 5 sowie gegebenenfalls 6 vorgegeben.

Auch eine Gärschranktemperatur der Brötchenanlage 6 kann entsprechend den Sensordaten der Innenraum-Sensoreinrichtung 10 und/oder der Umgebungs-Sensoreinrichtung 19 beeinflusst werden. Bei hoher Innenraum-Luftfeuchtigkeit kann beispielsweise eine Gärzeit in der Gäreinrichtung 8 verringert werden. Entsprechendes gilt bei einer hohen Innenraum-Temperatur. Auch eine Mischdauer oder die Zugabe insbesondere von Teigadditiven bei der Teigteil- und Wirkeinrichtung der Brötchenanlage 6 kann entsprechend abhängig von den gemessenen Raumzustands-Parametem und/oder von den gemessenen Umgebungs-Wetter-Parametern geändert über die Steuer/Regeleinrichtung 15 vorgegeben werden.

Eine Beeinflussung der vorgenannten Steuerdaten über die Steuer/Regeleinrichtung 15 kann abhängig von einer Soll/Istwertdifferenz linear gemäß einer vorgegebenen Regelgleichung erfolgen. In eine solche Regelgleichung unter Vorgabe geänderter Steuerdaten können Gewichtungsfaktoren eingehen.

Bei der Ermittlung der Steuerdaten kann eine Taupunkts-Berechnung anhand der Sensordaten der Innenraum-Sensoreinrichtung 10 und/oder der Umgebungs-Sensoreinrichtung 19 erfolgen.

Grundsätzlich kann die Steuer/Regeleinrichtung 15 ein Resultat früherer Betriebsabläufe des Backsystems 1 berücksichtigen, indem beispielsweise Sollwerte, die als Vorgabedaten der Regelgleichung hinterlegt werden, als Resultat früherer Betriebsabläufe des Backsystems hinterlegt bzw. angepasst wurden. Dies kann im Rahmen eines Teach-in-Verfahrens des Backsystems 1 erfolgen. Auch Erfahrungswerte des Bäckers können auf diese Weise berücksichtigt werden.

Die Sensordaten können von der Innenraum-Sensoreinrichtung 10 bzw. der Umgebungs-Sensoreinrichtung 19 zyklisch erfasst werden. Alternativ oder zusätzlich können die Sensordaten der Innenraum-Sensoreinrichtung 10 bzw. der Umgebungs-Sensoreinrichtung 10 abhängig vom Backbetrieb des Backsystems 1 erfasst werden, z. B. zu Beginn eines Backprogramms und/oder zu Beginn eines parametersensitiven Backschritts.

Bei der Ermittlung der Daten kann eine Mittelwertbildung mit möglicher Gewichtung des Messwertes erfolgen. Die von der Steuer/Regeleinrichtung 15 vorgegebenen Steuerdaten stellen geänderte Sollwerte des Backprogramms dar. Mehrere oder, wie im vorstehend beschriebenen Fall, alle Backschritte des jeweiligen Backprogramms können parametersensitive Backschritte sein. Alternativ ist es möglich, dass nur einzelne Backschritte oder auch nur genau ein Backschritt einen derartigen parametersensitiven Backschritt darstellt. Die Steuerdaten können durch die Steuer/Regeleinrichtung 15 über eine Berechnung, ausgehend von den erfassten Sensordaten, oder auch über ein Nachschlagen in einer vorher in einem Speicher der Steuer/Regeleinrichtung 15 abgelegten Look-up-Tabelle ermittelt werden.

## Patentansprüche

1. Backsystem (1)
- mit mindestens einem Backofen (2 bis 5), angeordnet in einem Bäckerei-Raum (9),
- mit einer Innenraum-Sensoreinrichtung (10) mit mindestens einem Innenraum-Sensor (11 bis 13) zur Erfassung mindestens eines Raumzustands-Parameters außerhalb des Backofens (2 bis 5) und innerhalb des Bäckerei-Raums (9),
- mit einer Umgebungs-Sensoreinrichtung (19) mit mindestens einem Umgebungs-Sensor (20 bis 22) zur Erfassung mindestens eines Umgebungs-Wetter-Parameters in einer Umgebung des Bäckerei-Raums (9),
- mit einer Steuer/Regeleinrichtung (15), die mit der Innenraum-Sensoreinrichtung (10) und der Umgebungs-Sensoreinrichtung (19) sowie mit dem mindestens einen Backofen (2 bis 5) in Signalverbindung (14, 23, 16) steht.

2. Backsystem nach Anspruch 1, **dadurch gekennzeichnet, dass** die Innenraum-Sensoreinrichtung (10) als Innenraum-Sensoren aufweist: einen Innenraum-Temperatursensor (11) und/oder einen Innenraum-Luftdrucksensor (12) und/oder einen Innenraum-Luftfeuchtigkeitssensor (13).

3. Backsystem nach Anspruch 1 oder 2, **dadurch gekennzeichnet, dass** die Umgebungs-Sensoreinrichtung (19) aufweist: einen Umgebungs-Temperatursensor (20) und/oder einen Umgebungs-Luftdrucksensor (21) und/oder einen Umgebungs-Luftfeuchtigkeitssensor (22).

4. Backsystem nach einem der Ansprüche 1 bis 3, **dadurch gekennzeichnet, dass** der mindestens eine Backofen eine Umluft-Heizeinrichtung (26) mit mindestens einem Umluft-Ventilator (27) aufweist.

5. Backsystem nach einem der Ansprüche 1 bis 4, **dadurch gekennzeichnet, dass** der mindestens eine Backofen (2 bis 5) eine Beschwadungs-Einrichtung (28) mit einer steuerbaren Entschwadungseinheit (29) aufweist.

6. Backsystem nach einem der Ansprüche 1 bis 5, **gekennzeichnet durch** mehrere Backöfen (2 bis 5).

7. Verfahren zum Betrieb eines Backsystems (1) nach einem der Ansprüche 1 bis 6 mit folgenden Schritten:
- Bereitstellen eines Backprogramms mit Backschritten, wobei mindestens einer der Backschritte als parametersensitiver Backschritt abhängig ist von einer Differenz zwischen einem gemessenen Ist-Raumzustands-Parameter und einem vorgegebenen Soll-Raumzustands-Parameter und/oder abhängig ist von einer Differenz zwischen einem gemessenen Ist-Umgebungs-Wetter-Parameter und einem vorgegebenen Soll-Umgebungs-Wetter-Parameter,
- Erfassen von Innenraum-Sensordaten der Innenraum-Sensoreinrichtung (10),
- Erfassen von Umgebungs-Sensordaten der Umgebungs-Sensoreinrichtung (19),
- Beeinflussen des parametersensitiven Backschritts auf Grundlage von Steuerdaten, die von der Steuer/Regeleinrichtung (15) anhand der erfassten Sensordaten ermittelt und vorgegeben werden.

8. Verfahren nach Anspruch 7, **dadurch gekennzeichnet, dass** als Steuerdaten vorgegeben werden:
- eine Backtemperatur während des parametersensitiven Backschritts und/oder
- eine Drehzahl eines Umluft-Ventilators (27) des Backofens (2 bis 6) und/oder
- eine Entschwadungsrate der Entschwadungseinheit (29) und/oder
- eine Schwadenmenge, die über die Beschwadungseinrichtung (28) vorgebbar ist.

9. Verfahren nach Anspruch 7 oder 8, **dadurch gekennzeichnet, dass** bei der Ermittlung der Steuerdaten eine Taupunkts-Berechnung erfolgt.

10. Verfahren nach einem der Ansprüche 7 bis 9, **dadurch gekennzeichnet, dass** bei der Ermittlung und Vorgabe der Steuerdaten Sollwerte der Steuerdaten ermittelt werden, die von den Differenzen der erfassten Sensordaten zu im Backprogramm vorgegebenen Vorgabe-Parameterdaten abhängen.

11. Verfahren nach einem der Ansprüche 1 bis 10, **dadurch gekennzeichnet, dass** Vorgabe-Daten, von denen ausgehend Steuerdaten des mindestens einen parametersensitiven Backschritts vorgegeben werden, als Resultat früherer Betriebsabläufe des Backsystems (1) hinterlegt wurden.

12. Verfahren nach einem der Ansprüche 7 bis 11, **dadurch gekennzeichnet, dass** die Sensordaten der Innenraum-Sensoreinrichtung (10) und/oder der Umgebungs-Sensoreinrichtung (19) zyklisch erfasst werden.

13. Verfahren nach einem der Ansprüche 7 bis 12, **dadurch gekennzeichnet, dass** die Sensordaten der Innenraum-Sensoreinrichtung (10) und/oder der Umgebungs-Sensoreinrichtung (19) abhängig vom Backbetrieb des Backsystems (1) erfasst werden.
